# EUROPÄISCHE PATENTSCHRIFT

(11) **EP 2 499 705 B1**
(45) Veröffentlichungstag und Bekanntmachung des Hinweises auf die Patenterteilung: **14.01.2015**
(21) Anmeldenummer: 10785335.0
(22) Anmeldetag: 12.11.2010
(51) Int. Cl.: H01R 9/05, H01R 13/58, H02G 3/06

(54) **ELEKTRISCHER STECKVERBINDER**
ELECTRICAL PLUG CONNECTOR
CONNECTEUR ÉLECTRIQUE

(30) Priorität: 14.11.2009 DE 202009015571 U
(43) Veröffentlichungstag der Anmeldung: 19.09.2012
(73) Patentinhaber: Wieland Electric GmbH, 96052 Bamberg (DE)
(72) Erfinder: HOHNER, Manfred, 96191 Viereth-Trunstadt (DE); SCHÖPPLEIN, Helmut, 96188 Stettfeld (DE)
(74) Vertreter: Tergau & Walkenhorst
(86) Internationale Anmeldenummer: PCT/EP2010/006900
(87) Internationale Veröffentlichungsnummer: WO 2011/057798

(56) Entgegenhaltungen:
- EP-A2- 1 598 684
- WO-A1-2007/112771
- US-A- 4 990 721
- US-A- 5 683 117
- US-A1- 2004 011 549

## Beschreibung

Die Erfindung betrifft einen elektrischen Steckverbinder mit einem Gehäuse zur Aufnahme von elektrischen Leitern.

Ein elektrischer Steckverbinder besteht im Wesentlichen aus an elektrischen Leitern befestigten Anschlusskontakten, die von einem Steckverbindergehäuse umgeben sind. Die Anschlusskontakte eines solchen Steckverbinders sind abhängig von ihrer jeweiligen Funktion als Steckerkontakte oder als Buchsenkontakte ausgebildet. Zu jedem Steckverbinder existiert ein steckkompatibler weiterer Gegensteckverbinder zur Ausbildung einer Steckverbinderkupplung. Dadurch bildet ein mit Steckerkontakten versehener Steckverbinder den Stecker, während ein mit Buchsenkontakten versehener Gegensteckverbinder die Buchse der Steckverbinderkupplung bildet. Im montierten Zustand wird der Steckverbinder üblicherweise mit dem komplementären Gegensteckverbinder zusammengesteckt. Steckverbinder und Gegensteckverbinder bilden dann eine elektrisch leitende Steckkupplung miteinander aus.

Ein derartiger elektrischer Steckverbinder ist beispielsweise aus der DE 103 11 507 B4 bekannt. Hierbei werden elektrische Leiter in einen zylinderförmigen Kontaktträger von hinten eingesteckt. Von vorne weist der Kontaktträger ein bestimmtes Rundsteckverbindergesicht auf. Zum Arretieren der elektrischen Leiter werden an den Kontaktträger durch Filmscharniere angebundene Schwenkpaddel in Richtung auf eine die Leitungen zusammenfassendes Leitungskabel verschwenkt und von einem Schrumpfschlauch ummantelt.

Während es beispielsweise in Deutschland aufgrund der derzeitigen Normungslage möglich ist, Leitungen in Kabelkanälen bei der Gebäudeinstallation mit einem üblichen Kunststoffmantel zu verlegen, besteht insbesondere in angelsächsischen und asiatischen Ländern die Vorschrift, eine auch als Conduit bezeichnete Hüllleitung zu verwenden. Solche Conduite können als Metall- oder auch Kunststoffrohre, beispielsweise in Form von Wellrohren ausgestaltet sein.

Ein Problem besteht darin, dass Hüllleitungen mit unterschiedlichen Außendurchmessern und/oder Außenstrukturen bereitgestellt sind, denen ein entsprechender Steckverbinder zuzuordnen ist.

Des Weiteren besteht bei der Verwendung von Metallschläuchen beziehungsweise Metallrohren häufig ein Erdungsproblem und dabei speziell eine Verbindung des Metallschlauches mit einem Erdungskontakt oder einem Metallgehäuse des Steckverbinders.

Bislang wurde die Erdung bei speziellen Steckverbindern, wie beispielsweise dem so bezeichneten GST 18-Steckverbinder der Wieland Electric GmbH dadurch realisiert, dass eine Stecker- bzw. Buchsenleiste in ein Metallgehäuse eingebettet und der Metallschlauch (Conduit) an der Rückseite des Metallgehäuses eingeführt wurde. Hierzu kann eine Gehäusekante vorgesehen sein, die durch Pressung einen Erdungsanschluss zwischen einem Schutzleiteranschluss und dem Metallschlauch herstellt. Da heutzutage darüber hinaus angestrebt ist, vermehrt Kunststoffgehäuse für die Steckverbinder zu verwenden, um diese in großtechnischer Herstellung zu fertigen, ist eine Erdung des Metallschlauchs zunehmend erschwert.

Aus der WO 2007/112771 ist ein elektrischer Steckverbinder mit den Merkmalen des Oberbegriffs des Anspruchs 1 bekannt. Dieser bekannte Steckverbinder weist ein quaderförmiges Außengehäuse auf. Im quaderförmigen Außengehäuse ist eine Leitung mit Hilfe eines zylinderförmigen Adapterteils verdrehsicher gelagert. Als Verdrehsicherung sind Ausnehmungen am Außenmantel des Adapterteils und entsprechend Rippen am Gehäuse vorgesehen. Ferner zeigt die US 4,990,721 einen Steckverbinder mit einem Blechbiegeteil als Außengehäuse. Dieses Blechbiegeteil weist Halteklappen auf, um eine Leitung mit gewelltem Außenmantel formschlüssig zu sichern.

Der Erfindung liegt die Aufgabe zugrunde, einen möglichst vielseitig einsetzbaren elektrischen Steckverbinder anzugeben, der in Verbindung mit einem gewendelten oder wellrohrartigen Metallschlauch als Conduit eine einfache und zuverlässige Erdung ermöglicht.

Diese Aufgabe wird erfindungsgemäß durch die Merkmale des Anspruchs 1 gelöst. Demnach ist ein elektrischer Steckverbinder mit einem separaten Adapterteil vorgesehen, der die Hüllleitung innerhalb des Gehäuses umschließt. Das Adapterteil weist eine Außenkontur auf, die an die Innenkontur des Gehäuses angepasst ist. Zudem weist das Adapterteil eine Innenstruktur zur Anbindung der zur Ummantelung der Leiter dienenden Hüllleitung (Conduit) auf.

Das Gehäuse des elektrischen Steckverbinders ist stets gleich. Dies ermöglichen stets gleiche Abmessungen des Außendurchmessers und der Außenkontur des Adapterteils. Für unterschiedliche Hüllleitungen ist dann lediglich eine Anzahl von Adaptern mit unterschiedlichem, angepasstem Innendurchmesser bzw. entsprechend angepasster Innenstruktur bereitzustellen. Hierdurch ist der elektrische Steckkontakt stets gleich, während für verschiedene Hüllleitungen lediglich unterschiedliche Adapterteile bereit zu stellen sind. Auf diese Weise eignet sich der erfindungsmäßige Steckverbinder für viele verschiedene Hüllleitungen. Dies führt zu einer erheblichen Reduzierung von vorzuhaltenden Einzelteilen sowie zur Materialeinsparung.

Der Außendurchmesser des Adapterteils ist an den Innendurchmesser des Gehäuses angepasst. Zudem weisen das Adapterteil Außenkonturelemente und das Gehäuse dazu komplementäre Innenkonturelemente auf. Dabei nimmt das Gehäuse des elektrischen Steckverbinders das Adapterteil vorzugsweise vollständig auf. Vorteilhafterweise sind das Gehäuse und das Adapterteil im Montagezustand miteinander formschlüssig und geeigneterweise verdrehsicher verbunden.

Als Innenstruktur weist die Innenseite des Adapterteils Strukturelemente auf, welche komplementär zu der darin aufgenommenen Hüllleitung ausgebildet sind. Zudem weist das Adapterteil einen an den Außendurchmesser der jeweiligen Hüllleitung angepassten Innendurchmesser auf.

Durch die Ausgestaltung des Adapterteils mit entsprechender Innenstruktur und Oberflächenkontur sowie einerseits an das Gehäuse und andererseits an die Hüllleitung angepassten Außen- bzw. Innendurchmessern kann bei einem Wellrohr als Conduit ein Formschluss gebildet werden, der den Verbleib eines Wellrohrs in einem Adapterteil auch unter Beanspruchungen, wie beispielsweise einer Zugbelastung, sicherstellt. Insbesondere mit einem kompletten Umschließen des Adapterteils vom Gehäuse des Steckverbinders sowie der Hüllleitung vom Adapter wird ein besonders guter Halt bewirkt.

Zur Fixierung der Hüllleitung im Adapterteil wird das Adapterteil von einer gabelartigen Klammer durchsetzt. Die gabelartige Klammer durchsetzt hier die Außenwand des Adapterteils und greift mit ihren gabelartigen Vorsprüngen in einen "Gewindegang" bzw. ein Wellental des gewendelten bzw. wellrohrartig ausgestalteten Außenmantels der Hüllleitung ein. Die Hüllleitung ist metallisch und die gabelartige Halteklammer erfüllt die Doppelfunktion der Halteklammer einerseits und des Erdungskontakts andererseits.

In einer besonders vorteilhaften Ausgestaltung weist der elektrische Steckverbinder ein Kontaktträgerteil und ein aus zwei Gehäusehalbschalen zusammengesetztes Gehäuse auf. Die Gehäusehalbschalen werden mit ineinandergreifenden Rasthaken und Rastöffnungen zum Gehäuse gefügt. Zudem weist das Kontaktträgerteil eine der Anzahl der leiterendseitigen Anschlusskontakte entsprechende Anzahl von Öffnungen auf. Bevorzugt sind die Rasthaken an den Gehäusehalbschalen derart angeordnet, dass der Rasthaken der einen Halbschale und die Rastöffnung der radial gegenüberliegen anderen Halbschale miteinander verrasten. Diese Ausgestaltung gewährleistet einen besonders sicheren und festen Halt sowie die einfache Montage der Teile des elektrischen Steckverbinders. Zudem entfallen separate Verbindungselemente wie zum Beispiel Schrauben.

Die als Wellrohr ausgeführte Hüllleitung ist hierbei in ein einstückiges Adapterteil eingeschoben. Das Adapterteil weist hierfür einen hohlzylindrischen Aufnahmeraum auf. Die Hüllleitung liegt in diesem hohlzylindrischen Aufnahmeraum derart ein, dass der Außenmantel der Hüllleitung an den Innenflächen der Außenwände des hohlzylindrischen Aufnahmeraums anliegt. In weiterer bevorzugter Ausführungsform ragt mit Querabstand zur Außenwand des Aufnahmeraums, welcher der Außenwand des Adapterteils entspricht, ein Stützzylinder in den Aufnahmeraum hinein. Dieser Stützzylinder weist einen derartigen Querabstand mit seiner Außenfläche zur Innenfläche der Außenwand auf, dass zwischen Außenwand und Stützzylinder ein schlitzartiger Abstand gebildet ist. Dieser Abstand bildet eine Aufnahmetasche für die Hüllleitung. Die Hüllleitung liegt so vom Stützzylinder abgestützt in dieser Aufnahmetasche ein. Der Stützzylinder ragt dabei nach Art eines Kragens in die Hüllleitung hinein.

In einer weiteren Ausgestaltung umfasst auch das Adapterteil zwei Adapterhalbschalen. Diese weisen ihrerseits bevorzugt wiederum komplementäre Rastelemente auf. An einem ringförmigen Halteelement des Adapterteils sind die Adapterteilhalbschalen beispielsweise über angeformte Filmscharniere angelenkt. Dabei weist das Halteelement zweckmäßigerweise zwei gegenüberliegende Flachseiten auf, an die die Adapterhalbschalen angelenkt sind. Im Montagezustand sind die einander gegenüberliegenden Rastelemente der Adapterhalbschalen miteinander verrastet, während die Adapterhalbschalen mit dem Halteelement bevorzugt bündig abschließen. Die Anlenkung der Adapterhalbschalen am Halteelement stellt sicher, dass die Rastelemente ineinander passend gefügt sind. Das Adapterteil stellt somit ein geschlossenes Bauteil dar.

In einer weiteren Ausgestaltung weist der elektrische Steckverbinder Mittel zur Aufnahme eines Erdungskontakts, vorzugsweise in Form eines schmalen Blechstreifens auf. Das Adapterteil weist in dieser Ausführungsform eine Anschlussöffnung, beispielsweise in Form eines Passschlitzes auf, den der Erdungskontakt durchgreift. Zweckmäßigerweise ist der Erdungskontakt an einem Ende mit abbiegbaren Krallen versehen, die kammartig in die Außenstruktur der dann elektrisch leitenden Hüllleitung eingreifen. Der mit Nuten oder Einbuchtungen versehene Blechstreifen greift formschlüssig in den gewendelten Außenmantel der Hüllleitung ein. Der Erdungskontakt kann auch über die Stirnseite der Hüllleitung überstehen und eine Kontaktfahne bilden und in das Gehäuse hinein ragen. Im Montagezustand kann der Erdungskontakt zusätzlich auf die Hüllleitung aufgepresst sein. Insbesondere durch das Eingreifen und Aufpressen wird ein sicherer und nachhaltiger Erdungsschluss des Erdungskontakts mit der Hüllleitung gewährleistet. Zusätzlich können die Krallen des Erdungskontaktes ein ungewolltes Verdrehen der Hüllleitung gegenüber dem Gehäuse des elektrischen Steckverbinders verhindern.

Die mit der Erfindung erzielten Vorteile bestehen insbesondere darin, dass durch die Verwendung eines Adapterteils zur Anbindung der Hüllleitung an einen elektrischen Steckverbinder stets der gleiche Steckverbinder verwendet werden kann. Für die Aufnahme unterschiedlicher Hüllleitungen mit verschiedenen Durchmessern und Außenstrukturen ist lediglich ein innenseitig hieran angepasstes Adapterteil bereitzustellen. Zudem kann das Adapterteil als Träger eines Erdungskontaktes dienen. Dieser Erdungskontakt stellt eine Erdungsverbindung mit einem metallischen Gehäuseteil, insbesondere einer metallischen Gehäusehalbschale, oder einem zusätzlichen Erdungskontakt des Steckverbinders im Falle eines Kunststoffgehäuseteils her. Auch kann das Adapterteil zumindest teilweise elektrisch leitend sein und somit die Erdungsfunktion vollständig oder teilweise übernehmen.

Nachfolgend werden Ausführungsbeispiele der Erfindung anhand der Figuren näher erläutert. Dabei zeigen:
- Fig. 1: in perspektivischer Darstellung einen elektrischen Steckverbinder mit Blick in eine Gehäusehalbschale mit darin einliegendem Adapterteil, das eine Hüllleitung mit Halteelement Leitern umgreift,
- Fig. 2: in einer Darstellung gemäß Fig. 1 den elektrischen Steckverbinder mit Blick in die Gehäusehalbschale mit einem ein Halteelement durchgreifenden Erdungskontakt,
- Fig. 3: in Perspektivansicht das Adapterteil mit zwei aufgeklappten Adapterteilhalbschalen und dem in die Hüllleitung eingreifenden Erdungskontakt,
- Fig. 4: in einer Darstellung gemäß Fig. 3 das Adapterteil mit den zwei halb geschlossenen Adapterteilhalbschalen und mit dem Erdungskontakt, der in die Hüllleitung eingreift,
- Fig. 5: in perspektivischer Ansicht mit Blick auf eine Stirnseite das geschlossene Adapterteil mit herausragendem Erdungskontakt und mit den Adapterteilhalbschalen, die an dem Halteelement angelenkt sind und die Hüllleitung umschließen,
- Fig. 6: eine weitere Ausführungsform eines Adapters mit einer daran anzuschließenden Hüllleitung in Explosionsdarstellung,
- Fig. 7: das in Fig. 6 dargestellte Adapterteil,
- Fig. 8: das in Fig. 7 dargestellte Adapterteil mit eingeschobener Hüllleitung und teilweise eingeschobener Halteklammer,
- Fig. 9: die Darstellung gemäß Fig. 8 mit vollständig eingeschöbener Halteklammer, sowie
- Fig. 10: einen Schnitt durch den Adapter und die Hüllleitung bei vollständig eingeschobener Halteklammer.

Einander entsprechende Teile sind in allen Figuren mit den gleichen Bezugszeichen versehen.

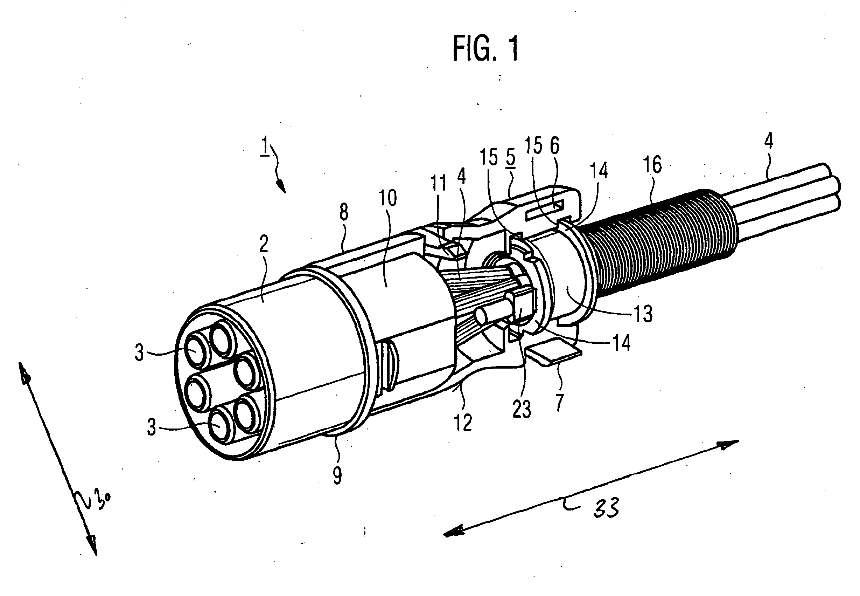

In Fig. 1 ist perspektivisch ein elektrischer Steckverbinder 1 mit einem Kontaktträgerteil 2 dargestellt, das stirnseitig Buchsenkontaktöffnungen 3 aufweist, zu denen Leiter 4 führen. Eine Gehäusehalbschale 5 weist eine Rastöffnung 6 und dieser radial gegenüberliegend einen Rasthaken 7 auf. Der Rasthaken 7 verrastet mit der Rastöffnung 6 einer komplementären, hier nicht dargestellten zweiten Gehäusehalbschale 5. Die Gehäusehalbschalen 5 nehmen das Kontaktträgerteil 2 zwischen sich auf und bilden im Montagezustand in Verbindung mit dem Kontaktträgerteil 2 das Gehäuse des elektrischen Steckverbinders 1. Dabei umschließen zylinderförmige Schalenabschnitte 8 der Gehäusehalbschalen 5 unter Anlage an einem Haltekragen 9 des Kontaktträgerteils 2 einen Trägerschaft 10 des Kontaktträgerteils 2. Ein weiterer, dem Schalenabschnitt 8 zugewandter und zum anderen Rasthaken 7 beabstandeter weiterer Rasthaken 11 verrastet mit einem hier nicht sichtbaren Rastfenster 12 der jeweils anderen Gehäusehalbschale 5.

Auf der den Buchsenkontaktöffnungen 3 entgegengesetzten Stirnseite des Steckverbinders 1 nehmen die Gehäusehalbschalen 5 ein Adapterteil 13 auf. Das Adapterteil 13 umfasst zwei zueinander beabstandete, flanschartige Umfangskrägen 14. Diese greifen in zwei gehäuseinnenseitige, komplementäre Gehäusenuten 15 der Gehäusehalbschalen 5 ein. Das Adapterteil 13 weist somit außenseitig eine an die Innenkontur der Gehäusehalbschalen 5 angepasste Außenkontur auf. Zudem ist der Außendurchmesser des Adapterteils 13 an den Innendurchmesser des Gehäuses im Bereich der geschlossen Gehäusehalbschalen 5 angepasst. Das Adapterteil 13 liegt somit formschlüssig im Gehäuse 5 des elektrischen Steckverbinders 1 ein. Das Adapterteil 13 umschließt eine im Ausführungsbeispiel gewendelte oder wellrohrartige Hüllleitung (Conduit) 16, die wiederum die Leiter 4 umhüllt.

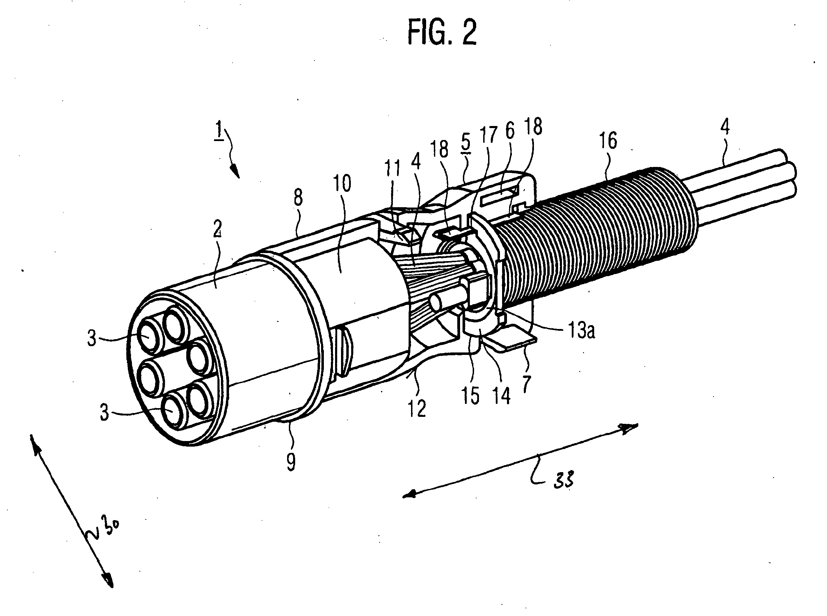

In Fig.2 ist perspektivisch der Steckverbinder 1 mit den Buchsenkontaktöffnungen 3, den Leitern 4, der Gehäusehalbschale 5, der Rastöffnung 6 und den Rasthaken 7,11 dargestellt. Das Adapterteil 13 weist hier lediglich ein Halteelement 13a auf. Dieses ist mit einem Durchgangsschlitz 17 versehen, den ein Erdungskontakt 18 durchgreift. Das Halteelement 13a trägt oder bildet den Haltekragen 14, der in die den Buchsenkontaktöffnungen 3 zugewandte Gehäusenut 15 eingreift. Das Halteelement 13a umgreift wiederum die Hüllleitung 16 und liegt an der Hüllleitung 16 stimseitig an.

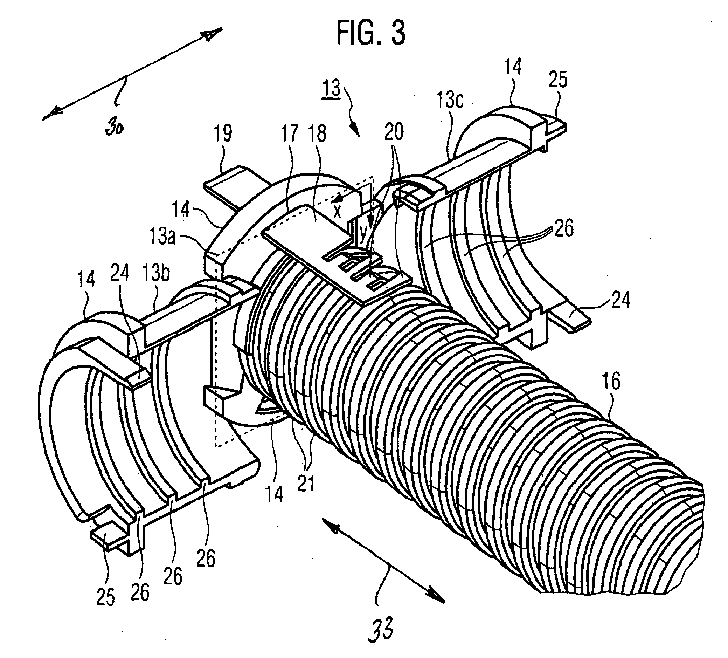

Wie in den Figuren 3 bis 5 vergleichsweise deutlich ersichtlich ist, überragt eine Kontaktfahne 19 des Erdungskontaktes 18 das Halteelement 13a des Adapterteils 13 und ragt auf der der Hüllleitung 16 abgewandten Seite in das Gehäuse 5 des elektrischen Steckverbinders 1 hinein. Der Erdungskontakt 18 weist kammartige Halte- und/oder Kontaktkrallen 20 auf. Diese sind am der Kontaktfahne 19 gegenüberliegenden Kontaktende des Erdungskontaktes 18 vorgesehen. Mit jeder zweiten Kontaktkralle 20 greift der Erdungskontakt 18 in entsprechende Wellentäler 21 ein, während die hierzu alternierenden Haltekrallen 20 auf Wellenbergen 22 der Hüllleitung 16, vorzugsweise unter Ausbildung einer Anpresskraft, aufliegen.

Der Erdungskontakt 18 ermöglicht eine elektrisch leitende Verbindung der dann elektrisch leitenden Hüllleitung 16, die hierzu beispielsweise als Metallrohr ausgeführt ist, mit einem Erdungskontakt 23 (Fig. 1) und/oder mit den dann metallischen oder elektrisch leitenden Gehäusehalbschalen 5 (Fig. 2) des elektrischen Steckverbinders 1. Durch den Eingriff der Halte- oder Kontaktkrallen 20 des Erdungskontaktes 18 in die korrespondierende Oberflächenstruktur der Hüllleitung 16 wird darüber hinaus die Hüllleitung 16 gegen ein Verdrehen gesichert.

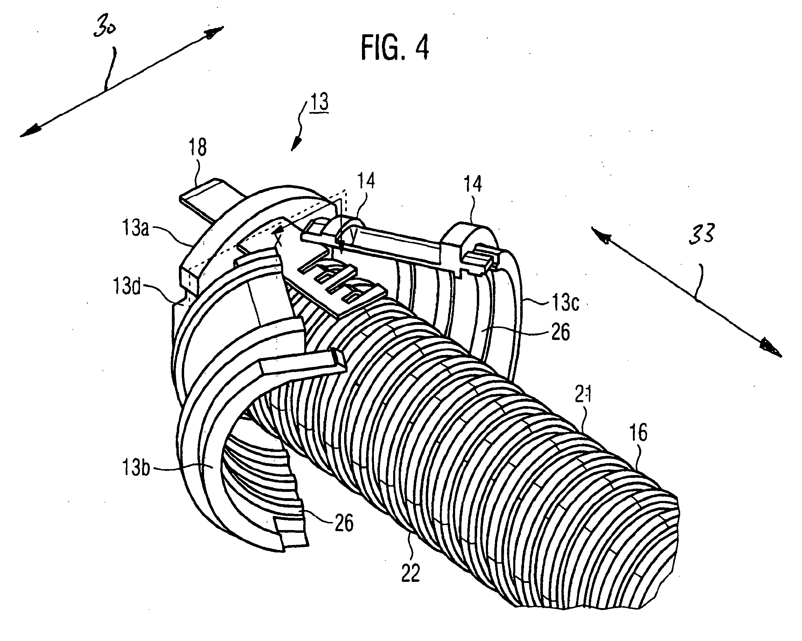

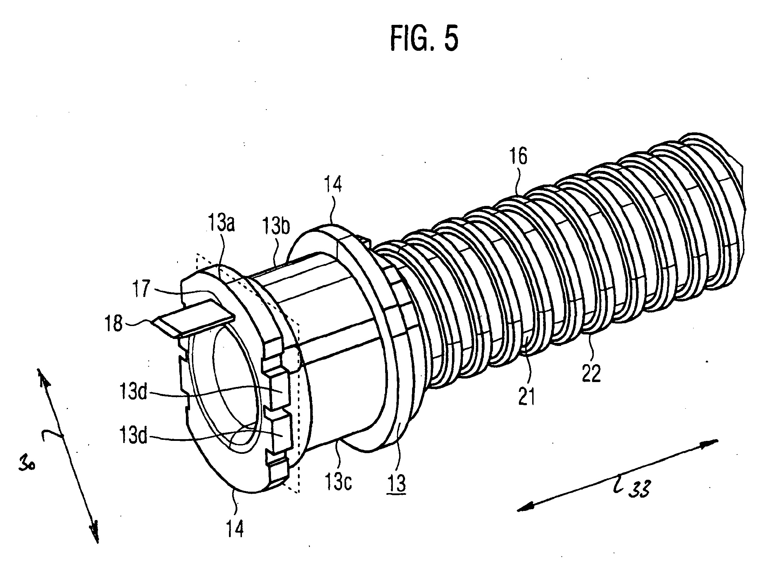

Das Adapterteil 13 weist zwei Adapterhalbschalen 13b und 13c auf. Diese sind über Filmschamiere 13d (Fig. 4 und 5) am Halteelement 13a angelenkt und somit - wie aus den Fig. 3 bis 5 ersichtlich - gegen die Hüllleitung 16 verschwenkbar und im geschlossenen Zustand miteinander verrastet. Hierzu weisen die zylinderförmigen Halbschalen 13b, 13c des Adapterteils 13 Rasthaken 24 und auf der gegenüberliegenden Seite korrespondierende Raststege 25 auf. Im verrasteten Zustand gemäß Fig. 5 hintergreift der Rasthaken 24 der einen Halbschale 13b den Raststeg 25 der anderen Halbschale 13c. Der Rasthaken 24 der Halbschale 13b hintergreift entsprechend den Raststeg 25 der Halbschale 13b. Das Halteelement 13a ist mit entsprechenden Flachseiten ausgeführt, an die die Filmscharniere 13d ebenso wie die Adapterhalbschalen 13b und 13c angeformt sind.

Die Adapterhalbschalen 13b, 13c und somit das Adapterteil 13 selbst weisen innenseitig umlaufende Umfangsstege 26 auf. Diese greifen im Montagezustand gemäß Fig. 5 in die Wellentäler 21 der Hüllleitung 16 ein. Dadurch ist die Innenstruktur des Adapterteils 13 an die Außenstruktur der Hüllleitung 16 angepasst. Zudem ist der Innendurchmesser des Adapterteils 13 bei geschlossenen Adapterhalbschalen 13b, 13c möglichst spielfrei an den Außendurchmesser der Hüllleitung 16 angepasst. Durch die Ausbildung des Formschlusses zwischen dem Adapterteil 13 und der Hüllleitung 16 mittels der innenseitigen Umfangsstege 26 ist die Hüllleitung 16 vom Adapterteil 13 zuverlässig gehalten. In Folge der formschlüssigen Halterung des Adapterteils 13 im Gehäuse-5 des elektrischen Steckverbinders 1 ist die Hüllleitung 16 am Adapterteil 13 sicher gehalten, wobei das Adapterteil 13 als Zugentlastung wirksam ist.

Das Adapterteil 13 ist hinsichtlich seines Außendurchmessers und seiner Außenstruktur stets gleich. Zur Anpassung an unterschiedliche Hüllleitungen 16 mit verschiedenen Außendurchmessern und Außenstrukturen ist das Adapterteil 13 lediglich Innenseitig entsprechend unterschiedlich ausgeführt. Daher sind für unterschiedliche Hüllleitungen 16 lediglich entsprechend angepasste Adapterteile 13 bereitzustellen, während der elektrische Steckverbinder 1 ansonsten stets gleich ist.

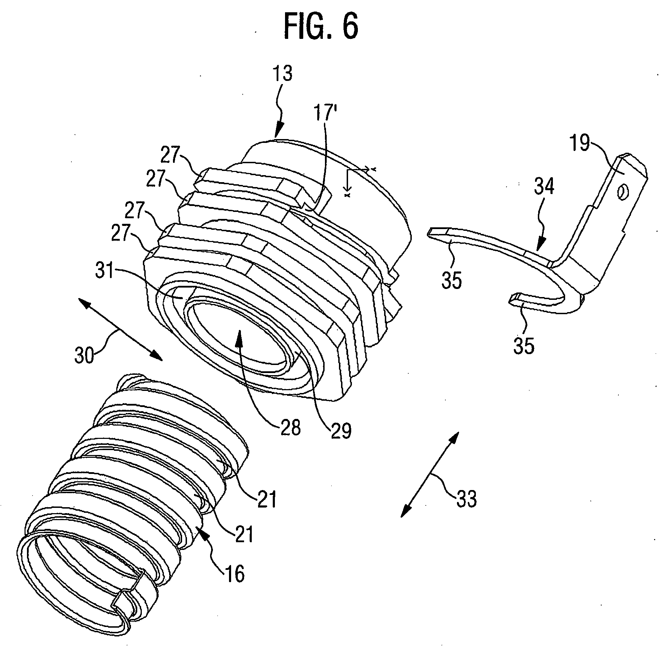

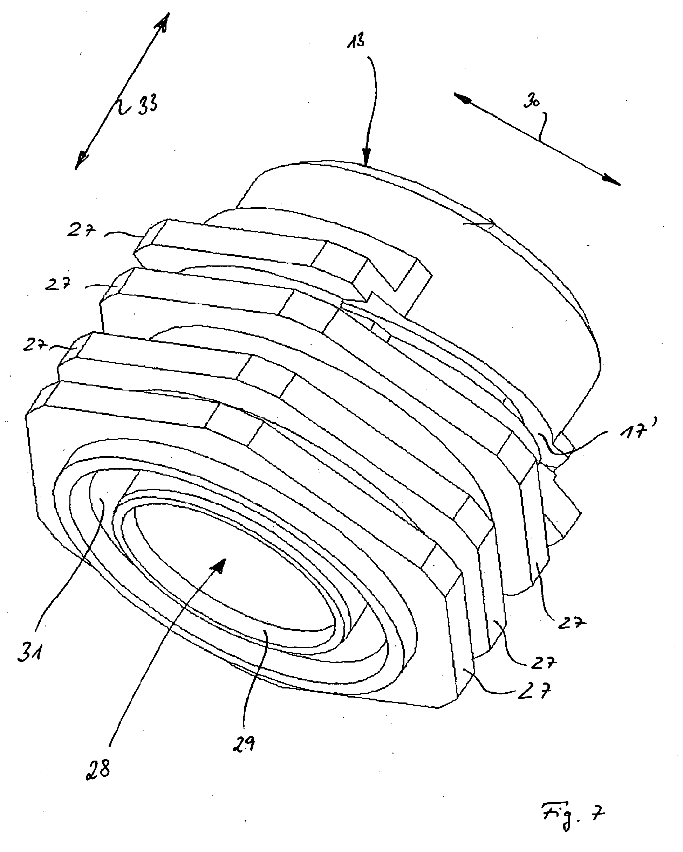

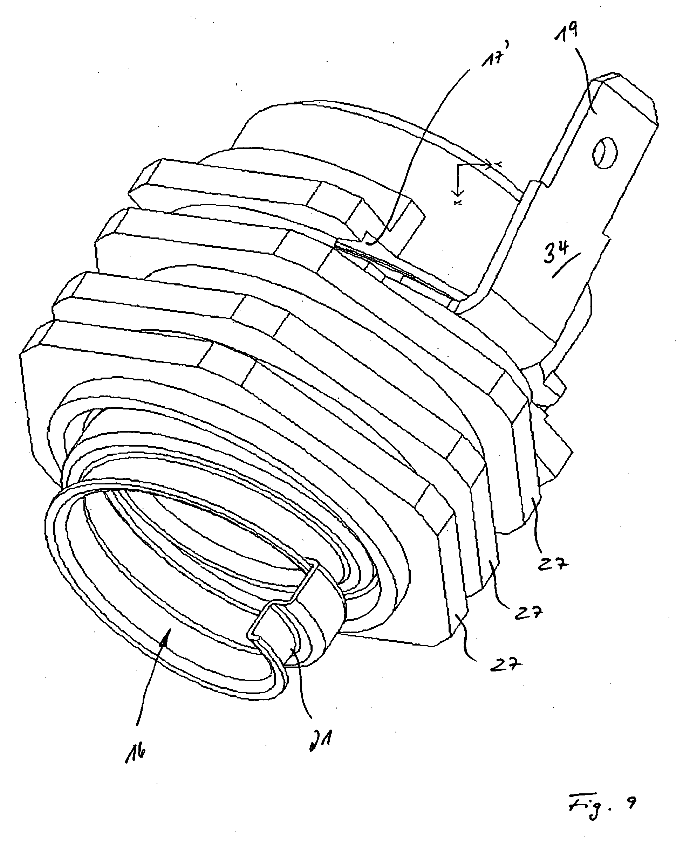

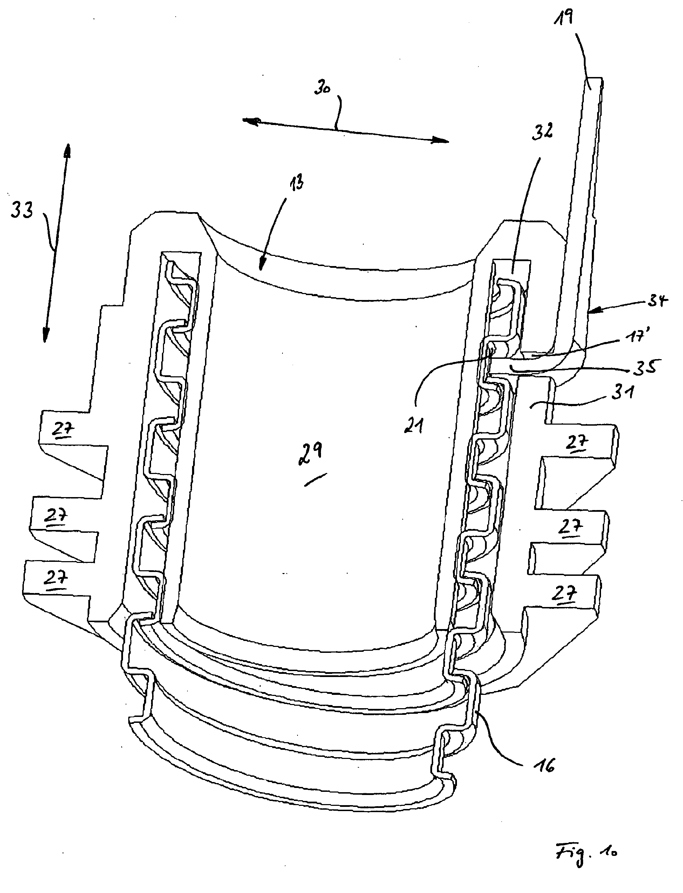

Die weitere in den Fig. 6 bis Fig. 10 dargestellte Ausführungsform zeigt das Adapterteil 13 ohne das Kontaktträgerteil 2. Auch diese Ausführungsform ist so zu verstehen, dass das Adapterteil 13 zur Realisierung des elektrischen Steckverbinders wiederum in das Kontaktträgerteil 2 eingebracht wird. Das in Fig. 6 dargestellte Adapterteil 13 trägt auf seinem Außenmantel Außenrippen 27. Das Adapterteil 13 weist einen hohlzylindrischen Aufnahmeraum 28 auf. In den hohlzylindrischen Aufnahmeraum 28 ragt ein Stützzylinder 29. Der Stützzylinder 29 weist in Radialrichtung 30 des Adapterteils 13 einen Querabstand zur Innenfläche der Außenwand 31 des Adapterteils 13 auf. Dieser Querabstand in Radialrichtung 30 zwischen der Außenfläche des Stützzylinders 29 und der Innenfläche der Außenwand 31 des Adapterteils 13 dient zur Bildung einer Aufnahmetasche 32 für die Hüllleitung 16 im Adapterteil 13.

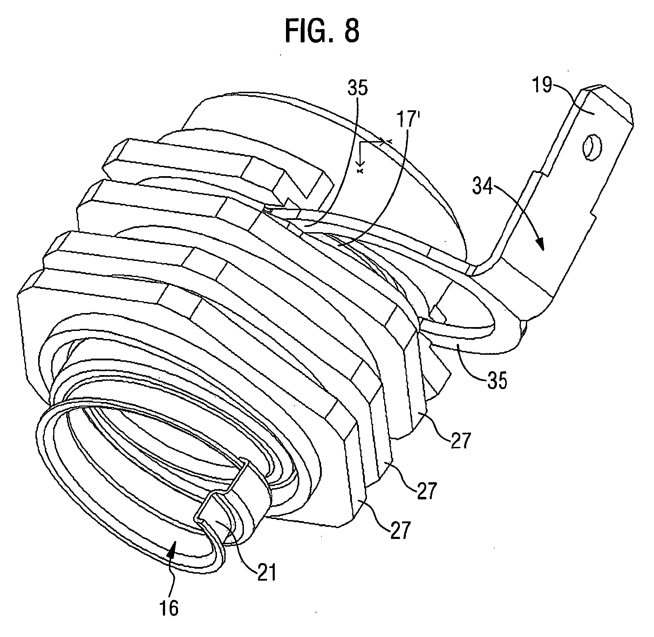

Zur Montage des Adapterteils 13 gemäß Fig. 6 bis Fig. 10 wird zunächst die Hüllleitung 16 in die Aufnahmetasche 32 in Axialrichtung 33 des Adapterteils 13 eingeschoben. Sobald die Hüllleitung 16 vollständig in der Aufnahmetasche 32 einliegt (Fig. 8, Fig. 9, Fig. 10) wird eine gabelartige Halteklammer 34 in Radialrichtung 30 durch einen Durchgangsschlitz 17' in der Außenwand des Adapterteils 13 in das Adapterteil 13 eingeschoben. Die Gabelvorsprünge 35 der gabelartigen Halteklammer 34 greifen im Montageendzustand in eines der Wellentäler 21 der als Wellrohr ausgestalteten Hüllleitung 16 ein. Die gabelartige Halteklammer 34 weist zudem die in Axialrichtung 33 winkelförmig von den Gabelvorsprüngen 34 abgebogene Kontaktfahne 19 auf. Bei der metallischen Hüllleitung 16 dient die Kontaktfahne 19 und dienen die an der Hüllleitung 16 angreifenden Gabelvorsprünge 35 zugleich als Erdungskontakt.

Mit Hilfe der Gabelvorsprünge 35 der in das in Radialrichtung 30 mit den Gabelvorsprüngen 35 fluchtenden Wellental 21 eingreifenden Halteklammer 34 ist die Hüllleitung 16 am Adapterteil 13 formschlüssig fixiert. Hierbei steift der Stützzylinder 29 die Hüllleitung 16 von innen her aus und bildet einen kragenartigen Halteflansch für die Hüllleitung 16 am Adapterteil 13.

**Bezugszeichenliste**

| | | | |
|---|---|---|---|
| 1 | elektrischer Steckverbinder | 27 | Halterippe |
| 2 | Kontaktträgerteil | 28 | Aufnahmeraum |
| 3 | Buchsenkontaktöffnung | 29 | Stützzylinder |
| 4 | Leiter | 30 | Radialrichtung |
| 5 | Gehäusehalbschale | 31 | Außenwand |
| 6 | Rastöffnung | 32 | Aufnahmetasche |
| 7 | Rasthaken | 33 | Axialrichtung |
| 8 | Schalenabschnitt | 34 | Halteklammer |
| 9 | Haltekragen | 35 | Gabelvorsprung |
| 10 | Trägerschaft | | |
| 11 | Rasthaken | | |
| 12 | Rastfenster | | |
| 13 | Adapterteil | | |
| 13a | Halteelement | | |
| 13b,c | Adapterhalbschale | | |
| 13d | Filmscharnier | | |
| 14 | Umfangskragen | | |
| 15 | Gehäusenut | | |
| 16 | Hüllleitung | | |
| 17 | Durchgangsschlitz | | |
| 17' | Durchgangsschlitz | | |
| 18 | Erdungskontakt | | |
| 19 | Kontaktfahne | | |
| 20 | Halte-/Kontaktkralle | | |
| 21 | Wellental | | |
| 22 | Wellenberg | | |
| 23 | Kontaktanschluss | | |
| 24 | Rasthaken | | |
| 25 | Raststeg | | |
| 26 | Umfangssteg | | |

## Patentansprüche

1. Elektrischer Steckverbinder (1) mit einem Gehäuse zur Aufnahme von Leitern (4), mit einem separaten Adapterteil (13), wobei das Adapterteil (13) eine an eine Innenkontur des Gehäuses angepasste Außenkontur aufweist und wobei eine Innenstruktur aus Strukturelementen auf der Innenseite des Adapterteils (13) besteht, welche komplementär zu einer darin aufgenommenen und als Ummantelung der Leiter (4) dienenden Hüllleitung (16) ausgebildet sind,
**gekennzeichnet**
**durch** eine metallische Hüllleitung (16), durch einen gewendelten oder wellrohrartigen Außenmantel der Hüllleitung (16), durch einen hohlzylindrischen Aufnahmeraum (28) im Adapterteil (13) und durch eine eine Seitenwand des Adapterteils (13) durchsetzende, gabelartige Halteklammer (34), welche formschlüssig am Außenmantel der Hüllleitung (16) angreift und als Erdungskontakt dient.

2. Elektrischer Steckverbinder (1) nach Anspruch 1,
**dadurch gekennzeichnet,**
**dass** das Adapterteil (13) innenseitig Strukturelemente zur Ausbildung eines Form- und/oder Kraftschlusses mit der Hüllleitung (16) aufweist.

3. Elektrischer Steckverbinder (1) nach Anspruche 1 oder 2,
**dadurch gekennzeichnet,**
**dass** das Adapterteil (13) außenseitig Konturelemente zur Ausbildung eines Form- und/oder Kraftschlusses mit dem Gehäuse aufweist.

4. Elektrischer Steckverbinder (1) nach einem der Ansprüche 1 bis 3,
**dadurch gekennzeichnet,**
**dass** das Gehäuse ein Kontaktträgerteil (2) mit Öffnungen für leiterendseitige Anschlusskontakte und zwei Gehäusehalbschalen (5) umfasst, die im Montagezustand mit dem Kontaktträgerteil (2) gefügt sind.

5. Elektrischer Steckverbinder (1) nach Anspruch 4, **dadurch gekennzeichnet,**
**dass** die Gehäusehalbschalen (5) jeweils mindestens ein Rastelement (6,7;11,12) zum gegenseitigen Verrasten aufweist.

6. Elektrischer Steckverbinder (1) nach Anspruch 5,
**dadurch gekennzeichnet,**
**dass** jede Gehäusehalbschale (5) einen Rasthaken (7,11) und eine dem Rasthaken (7,11) der jeweils anderen Gehäusehalbschale (5) radial gegenüberliegende Rastöffnung (6,12) aufweisen.

7. Elektrischer Steckverbinder (1) nach einem der Ansprüche 4 bis 6,
**dadurch gekennzeichnet,**
**dass** die Gehäusehalbschalen (5) das Adapterteil (13) aufnehmen.

8. Elektrischer Steckverbinder nach einem der Ansprüche 1 bis 7,
**gekennzeichnet durch**
einen **durch** einen zur Außenwand (31) des Aufnahmeraums (28) im Adapterteil (13) einen Querabstand aufweisenden, in den Aufnahmeraum (28) hineinragenden Stützzylinder (29) derart, dass zwischen der Innenfläche der Außenwand (31) des Aufnahmeraums (28) und der Außenfläche des Stützzylinders (29) eine umlaufende Aufnahmetasche (32) für die Hüllleitung (16) gebildet ist.

9. Elektrischer Steckverbinder (1) nach einem der Ansprüche 1 bis 7,
**dadurch gekennzeichnet,**
**dass** das Adapterteil (13) zwei Adapterhalbschalen (13b,13c) aufweist.

10. Elektrischer Steckverbinder (1) nach Anspruch 9,
**dadurch gekennzeichnet,**
**dass** die Adapterhalbschalen (13b, 13c) komplementäre Rastelemente, insbesondere einen Rasthaken (24) und einen Raststeg (25) zum gegenseitigen Verrasten aufweisen.

11. Elektrischer Steckverbinder (1) nach einem der Ansprüche 1 bis 10,
**dadurch gekennzeichnet,**
**dass** das Adapterteil (13) ein stirnseitiges Halteelement (13a) aufweist.

12. Elektrischer Steckverbinder (1) nach Anspruch 11,
**dadurch gekennzeichnet,**
**dass** die beiden Adapterhalbschalen (13b,13c) am Halteelement (13a) angelenkt sind.

13. Elektrischer Steckverbinder (1) nach einem der Ansprüche 1 bis 12,
**dadurch gekennzeichnet,**
**dass** der Erdungskontakt (18) eine Anschlussöffnung des Adapterteils (13) durchgreift.

14. Elektrischer Steckverbinder (1) nach einem der Ansprüche 1 bis 13,
**dadurch gekennzeichnet,**
**dass** der Erdungskontakt (18) in die Struktur der Hüllleitung (16) eingreift.

15. Elektrischer Steckverbinder (1) nach einem des Ansprüche 1 bis 14,
**dadurch gekennzeichnet,**
**dass** der Erdungskontakt (18) an dem der Hüllleitung (16) zugewandten Ende zur Ausbildung von abbiegbaren Krallen (20) kammartig ausgeführt ist.

16. Elektrischer Steckverbinder (1) nach Anspruch 15,
**dadurch gekennzeichnet,**
**dass** die Krallen (20) in die Außenstruktur der Hüllleitung (16) kammartig eingreifen und/oder der Erdungskontakt (18) im Montagezustand auf die Hüllleitung (13) aufgepresst ist.

## Claims

1. An electrical plug connector (1) having a housing for accommodating conductors (4) and having a separate adapter part (13), the adapter part (13) having an outer contour matched to an inner contour of the housing, an inner structure consisting of structural elements being provided on the inside of the adapter part (13), which structural elements being formed complementary to a sleeve conductor (16) accommodated therein and serving to encase the conductors (4),
**characterized**
**by** a metallic sleeve conductor (16), by a coiled or corrugated pipe-like outer casing of the sleeve conductor (16), by an accommodating space (28) in the shape of a hollow cylinder formed in the adapter part (13), and by a fork-like holding clamp (34) passing through a side wall of the adapter part (13), which holding clamp (34) acts in a form-locking manner on the outer casing of the sleeve conductor (16) and serves as a ground contact (18).

2. The electrical plug connector (1) of claim 1,
**characterized in that**
the adapter part (13) is provided on its inside with structural elements for forming a form-fit and/or force-fit connection with the sleeve conductor (16).

3. The electrical plug connector (1) of claim 1 or 2,
**characterized in that**
the adapter part (13) is provided on its outside with contour elements for forming a form-fit and/or force-fit connection with the housing.

4. The electrical plug connector (1) of any of claims 1 to 3,
**characterized in that**
the housing comprises a contact-carrier part (2) having openings for connection contacts on the side of the conductor end as well as two housing shells (5), which are joined to the contact-carrier part (2) in the assembled state.

5. The electrical plug connector (1) of claim 4,
**characterized in that**
the housing shells (5) are each provided with at least one snap-in element (6, 7, 11,12) for engaging into each other.

6. The electrical plug connector (1) of claim 5,
**characterized in that**
each housing shell (5) is provided with a snap-in hook (7, 11) and a snap-in opening (6, 12) positioned radially opposite the snap-in hook (7, 11) of the other housing shell (5).

7. The electrical plug connector (1) of any of claims 4 to 6,
**characterized in that**
the housing shells (5) accommodate the adapter part (13).

8. The electrical plug connector (1) of any of claims 1 to 7,
**characterized**
**by** a supporting cylinder (29) having a transverse distance from the outer wall (31) of the accommodating space (28) in the adapter part (13) and protruding into the accommodating space (28) in such a way that a peripheral accommodating pocket (32) for the sleeve conductor (16) is formed between the inner surface of the outer wall (31) of the accommodating space (28) and the outer surface of the supporting cylinder (29).

9. The electrical plug connector of any of claims 1 to 7,
**characterized in that**
the adapter part (13) has two adapter shells (13b, 13c).

10. The electrical plug connector (1) of claim 9,
**characterized in that**
the adapter shells (13b, 13c) are provided with complementary snap-in elements, in particular a snap-in hook (24) and a snap-in web (25) for engaging into each other.

11. The electrical plug connector (1) of any of claims 1 to 10,
**characterized in that**
the adapter part (13) has an end-face holding element (13a).

12. The electrical plug connector (1) of claim 11,
**characterized in that**
the two adapter shells (13b, 13c) are articulated on the holding element (13a).

13. The electrical plug connector (1) of any of claims 1 to 12,
**characterized in that**
the ground contact (18) passes through a connection opening of the adapter part (13).

14. The electrical plug connector (1) of any of claims 1 to 13,
**characterized in that**
the ground contact (18) engages into the structure of the sleeve conductor (16).

15. The electrical plug connector (1) of any of claims 1 to 14,
**characterized in that**
the ground contact (18) is designed in the manner of a comb on its end facing towards the sleeve conductor (16), in order to form bendable claws (20).

16. The electrical plug connector (1) of claim 15,
**characterized in that**
the claws (20) engage into the outer structure of the sleeve conductor (16) in the manner of a comb and/or the ground contact (18) is pressed on the sleeve conductor (13) in the assembled state.

## Revendications

1. Connecteur électrique (1) avec un boîtier recevant des conducteurs (4) et avec une partie d'adaptation (13) séparée qui comprend un contour extérieur adapté au contour intérieur du boîtier, une structure intérieure consistant en éléments structurels à l'intérieur de la partie d'adaptation (13) qui sont formé de façon complémentaire à une gaine (16) reçu là-dedans et servant à envelopper les conducteurs (4),
**caractérisé**
**par** une gaine métallique (16), par une enveloppe extérieure spiralée ou similaire à un tube ondulé, de la gaine (16), par un espace de réception (28) de la forme d'un cylindre creux formé dans la partie d'adaptation (13) et par un étrier de retenue (34) fourchu traversant une paroi latérale de la partie d'adaptation (13), cet étrier de retenue (34) agissant à engagement positif sur l'enveloppe extérieure de la gaine (16) et servant de mise à la terre (18).

2. Connecteur électrique (1) selon la revendication 1,
**caractérisé en ce que**
la partie d'adaptation (13) est munie à l'intérieur d'éléments structurels pour former une connexion à engagement positif et/ou à engagement à force avec la gaine (16).

3. Connecteur électrique (1) selon la revendication 1 ou 2,
**caractérisé en ce que**
la partie d'adaptation (13) est munie à l'extérieur d'éléments de contour pour former une connexion à engagement positif et/ou à engagement à force avec le boîtier.

4. Connecteur électrique (1) selon l'une quelconque des revendications 1 à 3,
**caractérisé en ce que**
le boîtier comprend une partie support-contact (2) ayant des ouvertures pour des contacts de raccordement du côté du bout du conducteur ainsi que deux semi-monocoques de boîtier (5) qui sont jointes à la partie support-contact (2), à l'état monté.

5. Connecteur électrique (1) selon la revendication 4,
**caractérisé en ce que**
chacune des monocoques de boîtier (5) est munie d'au moins un élément d'arrêt (6, 7, 11, 12) pour s'enclencher l'une dans l'autre.

6. Connecteur électrique (1) selon la revendication 5,
**caractérisé en ce que**
chaque monocoque de boîtier (5) est munie d'un crochet d'arrêt (7, 11) et une ouverture d'arrêt (6, 12) positionnée radialement opposée au crochet d'arrêt (7, 11) de l'autre monocoque de boîtier (5).

7. Connecteur électrique (1) selon l'une quelconque des revendications 4 à 6,
**caractérisé en ce que**
les monocoques de boîtier (5) reçoivent la partie d'adaptation (13).

8. Connecteur électrique (1) selon l'une quelconque des revendications 1 à 7,
**caractérisé**
**par** un cylindre support (29) ayant une distance transversale de la paroi extérieure (31) de l'espace de réception (28) dans la partie d'adaptation (13) et entrant dans l'espace de réception (28) de manière qu'une poche de réception (32) périphérique pour la gaine (16) est formée entre la surface intérieure de la la paroi extérieure (31) de l'espace de réception (28) et la surface extérieure du cylindre support (29).

9. Connecteur électrique selon l'une quelconque des revendications 1 à 7,
**caractérisé en ce que**
le partie d'adaptation (13) comprend deux monocoques d'adaptation (13b, 13c).

10. Connecteur électrique (1) selon la revendication 9,
**caractérisé en ce que**
les monocoques d'adaptation (13b, 13c) sont munies d'éléments d'arrêt complémentaires, en particulier d'un crochet d'arrêt (24) et d'une aile d'arrêt (25) s'enclenchant l'un dans l'autre.

11. Connecteur électrique (1) selon l'une quelconque des revendications 1 à 10,
**caractérisé en ce que**
la partie d'adaptation (13) comprend un élément de retenue (13a) frontal.

12. Connecteur électrique (1) selon la revendication 11,
**caractérisé en ce que**
les deux monocoques d'adaptation (13b, 13c) sont articulées sur l'élément de retenue (13a).

13. Connecteur électrique (1) selon l'une quelconque des revendications 1 à 12,
**caractérisé en ce que**
la mise à la terre (18) passe au travers d'une ouverture de connexion de la partie d'adaptation (13).

14. Connecteur électrique (1) selon l'une quelconque des revendications 1 à 13,
**caractérisé en ce que**
la mise à la terre (18) s'enclenche dans la structure de la gaine (16).

15. Connecteur électrique (1) selon l'une quelconque des revendications 1 à 14,
**caractérisé en ce que**
la mise à la terre (18) est conçue dans la manière d'un peigne à son bout en regard de la gaine (16), afin de former des griffes (20) pliables.

16. Connecteur électrique (1) selon la revendication 15,
**caractérisé en ce que**
les griffes (20) s'enclenchent dans la structure extérieure de la gaine (16) dans la manière d'un peigne et/ou la mise à la terre (18) est pressée sur la gaine (13) à l'état monté.
